# EUROPEAN PATENT APPLICATION

(11) **EP 3 805 640 A1**
(43) Date of publication of application: **14.04.2021**
(21) Application number: 19202298.6
(22) Date of filing: 09.10.2019
(51) Int. Cl.: F23D 1/04, C04B 2/12, F27B 1/00

(54) **COMBUSTION CHAMBER FOR AN ANNULAR VERTICAL SHAFT KILN AND PROCESS OF COMBUSTION IN SUCH A COMBUSTION CHAMBER**

(71) Applicant: S.A. LHOIST RECHERCHE ET DEVELOPPEMENT, 1342 Ottignies-Louvain-la-Neuve (BE)
(72) Inventor: HABIB, Ziad, 1630 Linkebeek (BE)
(74) Representative: Calysta NV

(57) **Abstract**

Burner (100) for an annular vertical shaft combustion chamber (200) comprising a first innermost sleeve (101) having a bore (104) for cooling air, with an extremity (112) directed through the inside of the said combustion chamber (200) closed by a plate (102) provided with a plurality of holes (120) and a second sleeve (103) forming an first annular channel (105) with the said first sleeve (101), the said first annular channel (105) being provided for injection of a combustible, preferably a solid powdered combustible carried by a carrier fluid, the combustion chamber and the method of combustion.

## Description

### Technical field

The present invention is related to a burner for an annular vertical shaft kiln and to a combustion chamber of an annular vertical shaft kiln comprising said burner which is designed for producing a flame from solid powdered combustible and arranged within the said combustion chamber for producing stable flame along the longitudinal axis of the combustion chamber with an improved combustion rate.

### State of the art

Originally designed for fast burning natural gas, the combustion chambers of annular shaft kiln (ASK) are of small size, namely small length over diameter (L/D).

While natural gas can easily produce stable flames along the axis of the combustion chamber with simple burners (axial injectors), it is difficult to have the same result with solid pulverized fuels such as coal or biomass or alternative fuels. The problem becomes more difficult to solve considering that upper combustion chambers in ASK operate in sub-stoichiometric conditions, namely with only 50% of the required combustion air.

Typically, a combustion chamber has a length in the order of magnitude of 2 m and the solid pulverized fuel is injected at an injection speed in the order of magnitude of 20 m/s, thereby the time passed by the solid pulverized fuel within the combustion chamber is of a tenth of second which is not enough to allow a full combustion within the chamber.

A combustion chamber is of generally cylindrical shape opened to the annular vertical channel of the annular shaft kiln comprising the solid material such as limestone or dolime to be calcined. The inner walls of the combustion chamber are made of a refractory material provided for withstanding high temperatures. The combustion chamber is connected to an arch or a bridge arranged within the annular vertical channel of the shaft kiln, for evacuating the heat from the combustion chamber to the annular vertical channel of the shaft kiln. The arch or bridge also comprises refractory materials. The arch prevents the solid material to be calcined to block the opening of the combustion chamber.

To fire pulverized solid fuels, the common practice since decades, achieved by trial and error, is to inject the fuel under the bridges via a transverse lance. Some other designs inject the fuel under the bridge through a lance lying along the floor of the combustion chamber. These current designs of combustion chamber operating with solid fuels result in an uncontrolled flame creating local high temperatures, reducing refractory lifetime. Poor combustion increases energy consumption and reduces production rate.

The current burners designed for producing a flame from solid pulverized combustible comprise a central channel connected to a powdered solid combustible supply and to a carrier air supply to pulverize the solid combustible. The central channel generally surrounded by an annular channel connected to an air supply to feed the flame produced. Most of the burners in the art have their central channel extending along a portion of a combustion chamber and comprise a deflector hood arranged at the extremity of the central channel such as to provide a movement of the pulverized solid combustible backwards in the combustion chamber in order to provide a stabilized flame. However, such kinds of burners are complicated to manufacture, and to maintain. They are subject to fooling which can present a risk of clogging and require frequent maintenance.

Another kind of burner is disclosed in the document WO2018/002151. This burner is designed for a lower combustion chamber of an annular vertical shaft kiln, wherein air heated in the kiln during the combustion is reused and injected tangentially relative to the longitudinal axis of the burner such as to drag helically the pulverized combustible injected through a central channel of the burner, thereby increasing the time of residence of the pulverized combustible in the lower combustion chamber. Such a burner comprises a central channel of relatively large diameter fed by pulverized solid combustible carried by carrier air and is arranged in an inlet of the combustion chamber forming with the burner an annular channel through which further air is injected in the combustion chamber. In a combustion process using such a burner, a jet of powdered solid fuel which is carried by carrier air, and possibly of a flow of primary air, and a supply of oxidizing gas are injected in the same direction of propagation such as to form a stream of oxidizing gas around the jet of fuel projected by the burner, at a temperature that causes combustion of the fuel. The ratio between the specific rate of change of momentum of the burner and the specific rate of change of momentum of the oxidizing gas being equal to or less than 1.0 and greater than zero, allows to provide a stable flame wherein the time of residence of the solid combustible in the combustion chamber is increased. However, if such a burner works well in lower combustion chambers wherein hot air coming from the upper part of the kiln is introduced in the combustion chamber, upper combustion chambers generally don't comprise any port for introducing hot gas into such upper combustion chambers and therefore, these burners are not adapted for all of the combustion chambers.

Therefore there is a need for a design of a burner which can be associated to a combustion chamber and which doesn't comprises at least some of the drawbacks of prior art.

One particular need is to provide a burner which can produce a flame from solid powdered combustible and wherein the combustion of the solid combustible in a combustion chamber is improved.

Another particular need is to provide a burner which can produce a flame from solid powdered combustible wherein the combustion of solid fuel has a reduced impact on the wear of the refractories of a combustion chamber and on the arch or bridge arranged downstream the combustion chamber.

### Summary of the invention

According to a first aspect, the present invention is related to a burner for a combustion chamber of an annular vertical shaft characterized in that it comprises:
a. a first innermost sleeve having a bore for injecting cooling air, having an extremity directed through the inside of the said combustion chamber, the said extremity being closed by a plate provided with a plurality of holes;
b. a second sleeve surrounding said first sleeve and forming an first annular channel with the said first sleeve, the said first annular channel being provided for injection of combustible, preferably a solid powdered combustible carried bya carrier fluid.

In one second embodiment, the said burner further comprises a third sleeve surrounding said second sleeve and forming a third annular channel with the said second sleeve, the said third annular channel being provided for injection of air, at least one of the said second sleeve or third sleeve being provided by fins arranged within the said third annular channel and extending helically from an first location to a second location such as to provide a swirl movement to the said air improving the mixing of said combustible with air.

In another embodiment including or not the features of the second embodiment, the said burner comprises a tubular injector arranged within the bore of the said first innermost sleeve and connected to a hole of the said plate, the said tubular injector being optionally removable, and comprising a connecting port for a secondary combustible supply to provide a secondary combustible for igniting the flame or for providing a cheaper combustible used partially in combination to the said combustible provided through the first annular channel, in order to decrease the costs of combustible.

The solid powdered combustible can be for example coal, coal oven gas, lignite. The secondary combustible can be for example recycled wastes, solid recovered fuels, recycled plastic fluff, sawdust.

The burner according the present invention can be included both in lower combustion chamber and upper combustion chamber of an annular vertical shaft kiln.

According to a second aspect, the present invention is related to a combustion chamber for an annular vertical shaft kiln, the said combustion chamber having a first closed extremity provided with a cylindrical inlet through which is inserted a burner for producing a flame and a second extremity opened to the inside of the said shaft kiln, characterized in that the said burner comprises:
- a first innermost sleeve having a bore for injecting cooling air and having an extremity directed through the inside of the said combustion chamber and closed by a plate provided with a plurality of holes;
- a second sleeve surrounding said first sleeve and forming an first annular channel with the said first sleeve, the said first annular channel being provided for injection of a combustible, preferably a solid powdered combustible carried by a carrier fluid;
and wherein said cylindrical inlet has a cylindrical inner wall forming a second annular channel with the said burner for injection of secondary air to confine the said flame within a fictive cylinder of diameter inferior to the diameter of the said combustion chamber.

The solid powdered combustible transported by a carrying fluid, generally air, is injected in the combustion chamber through the first annular channel of the burner. The innermost sleeve closed by the hollowed plate creates a depression of air which causes the solid powdered combustible to flow circularly back and forth, feeding and stabilizing the said flame. Such phenomenon is also known as bluff body effect. In order to prevent overheating of the hollowed plate, a flow of cooling air is provided through the first innermost sleeve and the plurality of holes machined into the hollowed plate. The cooling air has an injection speed smaller than the injection speed of carrier fluid. The design of the burner produces a stable flame along the axis of the combustion chamber with a controlled shape. In consequence, the combustion rate is improved and post combustion of solid fuel particles inside the material bed is reduced.

In addition, the present burner design allows firing gaseous or liquid fuels offering a fuel flexibility feature that was missing in the common practice described above.

The burner is designed for the upper combustion chamber but it can be used as well in the lower combustion chamber offering the same fuel flexibility advantages.

Preferably, the said burner further comprises a third sleeve surrounding said second sleeve and forming a third annular channel with the said second sleeve, the said third annular channel being provided for injection of air, one of the said second sleeve or third sleeve being provided by fins arranged within the said third annular channel and extending helically from an first location to a second location such as to provide a swirl movement to the said air improving the mixing of said combustible with air.

Preferably, the said combustion chamber is cylindrical and the said burner is arranged coaxially relative to the longitudinal axis of the combustion chamber or at proximity to the longitudinal axis of the combustion chamber. In consequence, the arrangement of the burner in the combustion chamber reduces wear of the refractory comparted to prior art practice wherein the flame produced by the burners of prior art using solid combustible fuel was directed at the proximity of the wall of the combustion chamber.

Preferably, each of the said sleeves has walls having a thickness comprises between 2 mm and 20 mm, preferably between 4 mm and 10 mm.

Preferably, the ratio between the external diameter of the said first sleeve 101 on the inner diameter of the said second sleeve 103 is comprised between 10% and 99%, preferably between 50% and 95%.

Preferably, said second annular channel between the said cylindrical inlet and the said burner comprises a first portion upstream a second terminal portion, wherein the said first portion forms a larger annular channel than the second terminal portion. Such a configuration of the second annular channel provides an acceleration of the flow at the extremity of the terminal portion, thereby reducing the power of the pump needed to provide a flow of air which has a speed of injection high enough to confine the flame within a fictive cylinder of diameter inferior to the diameter of the said combustion chamber.

Preferably, the ratio between the outermost diameter of the said burner and the inner diameter of the said inlet of the combustion chamber is comprised between 70% and 99%, preferably between 80% and 95%.

Preferably, the ratio between the width of the said third annular channel and the width of the said second annular channel is comprised between 50% and 200%, preferably between 75% and 150%.

Preferably, the said burner is interchangeable.

According to a third aspect, the present invention is related to a process for combustion of a solid powdered combustible in a combustion chamber of an annular vertical shaft kiln the said combustion chamber having a first closed extremity provided with a cylindrical inlet through which is inserted a burner for producing a flame, the said combustion chamber having a second extremity opened to the inside of the said shaft kiln, characterized in that the said burner comprises:
- a first innermost sleeve having a bore for injecting cooling air and having an extremity directed through the inside of the said combustion chamber and closed by a plate provided with a plurality of holes;
- a second sleeve surrounding said first sleeve and forming an first annular channel with the said first sleeve, the said first annular channel being provided for injection of a solid powdered combustible carried by a carrier fluid, such as a carrier gas, for example carrier air;
wherein said cylindrical inlet has a cylindrical inner wall forming a second annular channel with the said burner for injection of secondary air to confine the said flame within a fictive cylinder of diameter inferior to the diameter of the said combustion chamber,
and wherein the process comprises the steps of:
- injection of said solid powdered combustible through said first annular channel with a carrier fluid having a first speed of injection and igniting a flame;
- injection of a cooling fluid through the said bore of the said first sleeve at a second speed of injection reduced relative to the said first speed of injection, for cooling the said holed plate;
- injection of secondary air with a third speed of injection increased relative to the said first speed of injection, to confine the said flame within a fictive cylinder of diameter inferior to the diameter of the said combustion chamber.

Preferably, the said step of igniting said flame is achieved after a step of preheating the said combustion chamber with the said burner fed by combustible gas or by another burner fed with combustible gas.

Preferably, the said burner further comprises a third sleeve surrounding said second sleeve and forming a third annular channel with the said second sleeve, the said third annular channel being provided for injection of air, one of the said second sleeve or third sleeve being provided by fins arranged within the said third annular channel and extending helically from an first location to a second location, the process further comprising a step of injecting air with a fourth speed of injection intermediate between the said first speed of injection and the said third speed of injection through the said third annular channel such as to provide a swirl movement to the said air improving the mixing of said combustible with air.

Preferably, the said burner is interchangeable and the process comprises a step of removing the said burner and replacing the said burner by a second burner designed for combustion of a combustible gas.

In one embodiment, the said burner further comprises a tubular injector arranged within the bore of the said first innermost sleeve and connected to a hole of the said plate, the said tubular injector being optionally removable, and comprising a connecting port for a secondary combustible supply, and the process comprises a step of flowing a secondary combustible preferably with a carrier gas, for igniting the flame or for providing a cheaper combustible used partially in combination to the said combustible flowing through the said first annular channel, in order to decrease the costs of combustible.

### Brief description of the figures

Figure 1 represents a schematic cross sectional view of an annular vertical shaft kiln.
Figure 2 represents a schematic cross sectional view along a longitudinal axis of a combustion chamber according to a first embodiment of the invention.
Figure 3 represents a schematic cross sectional view along a longitudinal axis of a combustion chamber according to a second embodiment of the invention.

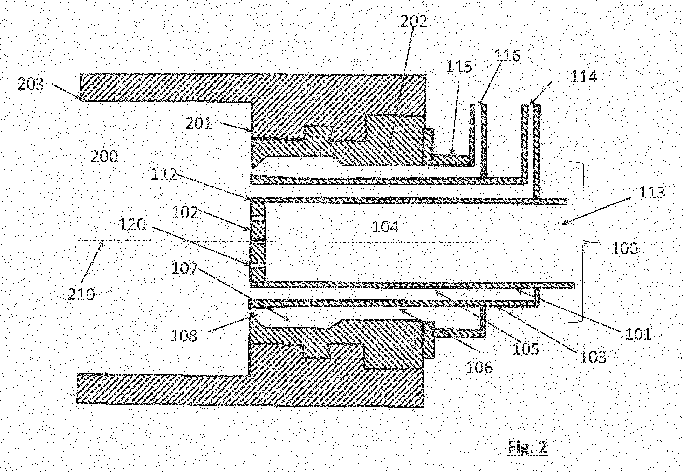

Figure 2 represents a schematic cross sectional view along a longitudinal axis of a combustion chamber according to a third embodiment of the invention.

It is to be mentioned that the drawings are not to scale.

### Description of the invention

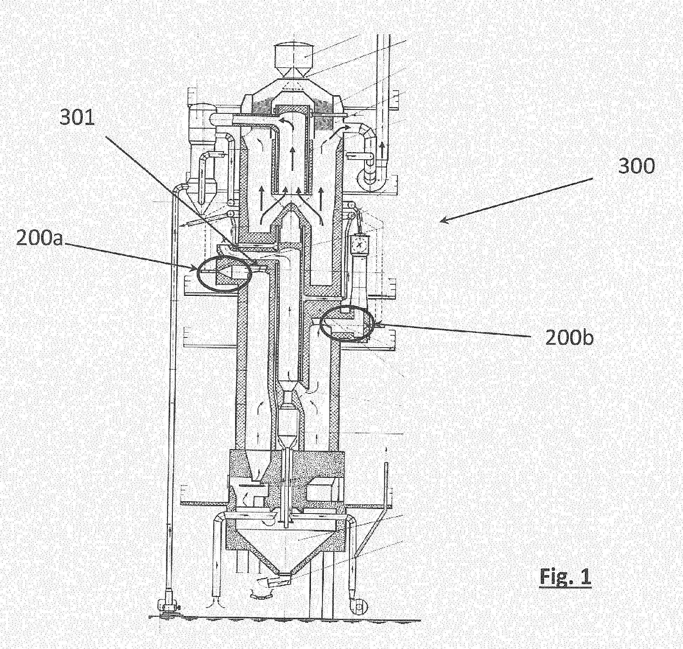

Figure 1 represents a schematic cross sectional view of an annular vertical shaft kiln 300 comprising a plurality of combustion chambers 200 terminated by an arch or a bridge 301. The material to be calcined, for example limestone or dolomite is introduced from the top of the kiln 300 which comprises an upper combustion chamber 200a and a lower combustion chamber 200b. The various components of an annular shaft kiln and its principle of functioning are well known in the art.

A first embodiment of a combustion chamber according to the present invention is presented in figure 2. The combustion chamber 200 has a first closed extremity 201 provided with a cylindrical inlet 202 through which is inserted a burner 100 for producing a flame. Opposite to the first extremity 201, the combustion chamber comprises a second extremity 203 opened to the annular channel of the said shaft kiln which comprises a bed of materials to be calcined. The inner walls of the combustion chamber are made of a refractory material. The said burner 100 comprises:
- a first innermost sleeve 101 having a bore 104 for injecting cooling air and having an extremity 112 directed through the inside of the said combustion chamber 200, the said extremity being closed by a plate 102 provided with a plurality of holes;
- a second sleeve 103 surrounding said first sleeve 101 and forming an first annular channel 105 with the said first sleeve 101, the said first annular channel 105 being connected to a combustible supply for injection of a combustible, preferably a solid powdered combustible carried by a carrier fluid;
and wherein said cylindrical inlet 202 has a cylindrical inner wall forming a second annular channel 106 with the said burner 100 for injection of secondary air to confine the said flame within a fictive cylinder of diameter inferior to the diameter of the said combustion chamber 200.

The said combustion chamber 200 is cylindrical and the said burner 100 is arranged coaxially relative to the longitudinal axis 210 of the combustion chamber or at the proximity to the said longitudinal axis 210 of the combustion chamber.

The burner 100 comprises a portion outside of the combustion chamber wherein the first innermost sleeve comprises a first port 113 connectable to a cooling air supply, the said second sleeve comprises a second port 114 connectable to solid powdered combustible supply and carrier gas supply, and the outer extremity of the said second annular channel 106 is tightly closed by an annular piece 115 provided by a third port 116 for feeding secondary air.

Preferably, each of the said sleeves has walls having a thickness comprises between 2 mm and 20 mm, preferably between 4 mm and 10 mm. In a particular embodiment of the invention, the wall thickness of the first sleeve and second sleeve is of 5 mm.

Preferably, the ratio between the external diameter of the said first sleeve (101) on the inner diameter of the said second sleeve (103) is comprised between 10% and 95%, preferably between 33% and 67%. For example, the outer diameter of the said first sleeve is comprised between 40 and 70 mm, more particularly between 50 mm and 70 mm and the width of the first annular channel 105 is comprised between 2 mm and 10 mm, preferably between 4 mm and 6 mm.

Preferably, the said second annular 106 channel between the said cylindrical inlet 202 and the said burner 100 comprises a first portion 107 upstream a second terminal portion 108, wherein the said first portion 107 forms a larger annular channel than the second terminal portion 108. Preferably, the said terminal portion 108 forms a taper with an inner diameter progressively reduced towards the combustion chamber. Such a design allows increasing the speed of injection of the secondary air into the combustion chamber without increasing the flow rate of the pump providing the secondary air.

Preferably, the ratio between the outermost diameter of the said burner (100) and the inner diameter of the said inlet (202) is comprised between 70% and 99%, preferably between 80% and 95%.

Preferably the said burner is interchangeable with another burner.

A first embodiment of the process according to the invention using the combustion chamber as described according to a first embodiment comprises the steps of:
(i) injection of said solid powdered combustible through said first annular channel 105 with a carrier fluid having a first speed of injection and igniting a flame;
(ii) injection of a cooling fluid through the said bore 104 of the said first sleeve at a second speed of injection reduced relative to the said first speed of injection, for cooling the said plate 102;
(iii) injection of secondary air with a third speed of injection increased relative to the said first speed of injection to confine the said flame within a fictive cylinder of diameter inferior to the diameter of the said combustion chamber.

Preferably, each of the steps (i), (ii) and (iii) are performed simultaneously.

In one embodiment, the said burner 100 is interchangeable with a second burner (not shown) used for combustion of a combustible gas or liquid, and the process comprises a preliminary step preheating the combustion chamber 200 using the second burner fed by a combustible gas or liquid. In one embodiment, the combustion chamber is preheated to 800°C. Then in a second preliminary step, the second burner is replaced by the burner 100 described herein above and solid powdered combustible is injected with the carrier air, the cooling air and the secondary air. The combustion chamber preheated beforehand provides the heat necessary to ignite the flame.

Alternatively, the said second port 114 of the burner can be connected to a combustible gas supply instead of the solid pulverized combustible and carrier gas supply. Once the combustion chamber has reached a desired temperature, for example 800°C, the second port 114 can be disconnected from the said combustible gas supply and connected to a solid pulverized combustible and carrier gas supply.

In one embodiment of the process, the solid pulverized combustible is injected with the carrier gas in the combustion chamber with a speed of injection of 25 m/s. The cooling fluid is flown through the bore 104 of the first sleeve at a speed of injection of 5 m/s to cool the holed plate 102 and such as to provide a depression of air which causes the solid powdered combustible to flow circularly back and forth, creating a bluff body effect feeding and stabilizing the flame. The secondary air is injected in the combustion chamber through the reduced channel 108 of the second annular channel 106 with a speed of injection higher than the speed of injection of the solid pulverized combustible and carrier gas, for example a speed of injection comprised between 40 m/s and 100 m/s, more particularly between 50 m/s and 80 m/s.

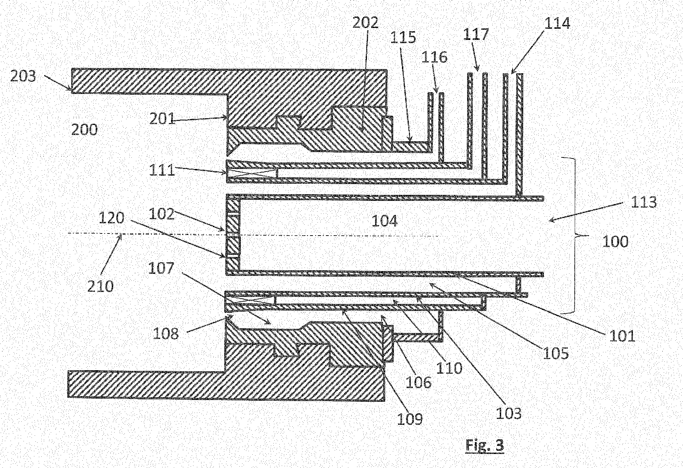

A second embodiment of a combustion chamber according to the present invention is presented in figure 3. The combustion chamber 200 has a first closed extremity 201 provided with a cylindrical inlet 202 through which is inserted a burner 100 for producing a flame. Opposite to the first extremity 201, the combustion chamber comprises a second extremity 203 opened to the annular channel of the said shaft kiln comprising a bed of material to be calcined. The said burner 100 comprises:
- a first innermost sleeve 101 having a bore 104 for injecting cooling air and having an extremity 112 directed through the inside of the said combustion chamber 200, the said extremity being closed by a plate 102 provided with a plurality of holes 120;
- a second sleeve 103 surrounding said first sleeve 101 and forming an first annular channel 105 with the said first sleeve 101, the said first annular channel 105 being provided for injection of a combustible, preferably a solid powdered combustible carried by a carrier fluid;
- a third sleeve 109 surrounding said second sleeve 103 and forming a third annular channel 110 with the said second sleeve 103, the said third annular channel 110 being provided for injection of air, at least one of the said second sleeve 103 or third sleeve 110 being provided by fins 111 arranged within the said third annular channel 110 and extending helically from an first location to a second location such as to provide a swirl movement to the said air improving the mixing of said combustible with air;
and wherein said cylindrical inlet 202 has a cylindrical inner wall forming a second annular channel 106 with the said burner 100 for injection of secondary air to confine the said flame within a fictive cylinder of diameter inferior to the diameter of the said combustion chamber.

The said combustion chamber 200 is cylindrical and the said burner 100 is arranged coaxially relative to the longitudinal axis 210 of the combustion chamber 200 or at the proximity to the longitudinal axis 210 of the combustion chamber.

The burner comprises a portion outside of the combustion chamber wherein the first innermost sleeve 101 comprises a first port 113 connectable to a cooling air supply, the said second sleeve 103 comprises a second port 114 connectable to a combustible supply, preferably a solid powdered combustible and of carrier gas supply, and the extremity of the said second annular channel 106 outside the combustion chamber is tightly closed by an annular piece 115 provided by a third port 116 for feeding secondary air. The third sleeve 109 comprises a fourth port 117 connectable to a swirl air supply.

Preferably, the fins 111 extends helically from the extremity of the burner directed to the combustion chamber, to a second location in the third annular channel, for example along a distance comprised between 2 and 10 cm. The helix angle formed by the fins can be comprised between 5° and 40°, preferably the helix angle is of at least 20°.

Preferably, each of the said sleeves has walls having a thickness comprises between 2 mm and 20 mm, preferably between 4 mm and 10 mm. In a particular embodiment of the invention, the wall thickness of the first sleeve and second sleeve is of 5 mm.

Preferably, the ratio between the external diameter of the said first sleeve 101 on the inner diameter of the said second sleeve 103 is comprised between 10 % and 99 %, preferably between 50 % and 95%. For example, the outer diameter of the said first sleeve is comprised between 40 and 70 mm, more particularly between 50 mm and 70 mm and the width of the first annular channel 105 is comprised between 2 mm and 10 mm, preferably between 4 mm and 6 mm.

Preferably, the ratio between the width of the said third annular channel 110 and the width of the said second annular 106 channel is comprised between 4 % and 200%, preferably between 75% and 150%. The width of the second annular channel 106 may vary along the longitudinal axis of the burner from for example at least 1 mm or 2 mm up to 10 or 50 mm. For example, the width of the third annular channel 110 is preferably longitudinally constant and comprised between 2 and 10 mm, for example 5 mm.

Preferably, the said second annular channel between the said cylindrical inlet 202 and the said burner 100 comprises a first portion 107 upstream a second terminal portion 108, wherein the said first portion 107 forms a larger annular channel than the second terminal portion 108. Preferably, the said terminal portion 108 forms a taper with an inner diameter progressively reduced towards the combustion chamber.

Preferably, the ratio between the outermost diameter of the said burner 100 and the inner diameter of the said inlet 202 is comprised between 70% and 99%, preferably between 80% and 95%.

Preferably the said burner is interchangeable with another burner, for example a burner connected to a combustible gas supply.

A second embodiment of the process according to the invention using the combustion chamber as described according to a first embodiment comprises the steps of:
i. injection of said solid powdered combustible through said first annular channel 105 with a carrier fluid having a first speed of injection, and igniting a flame;
ii. injection of a cooling fluid through the said bore 104 of the said first sleeve 101 at a second speed of injection reduced relative to the said first speed of injection, for cooling the said plate 102;
iii. injection of secondary air with a third speed of injection increased relative to the said first speed of injection to confine the said flame within a fictive cylinder of diameter inferior to the diameter of the said combustion chamber 200
iv. injection of swirl air through the said third annular channel 110 with a fourth speed of injection intermediate between the said first speed of injection and the said third speed of injection for providing a swirl movement of air around the flame and improving mixing of solid pulverized combustible with the flame.

Preferably, each of the steps (i), (ii), (iii) and (iv) are performed simultaneously.

In one embodiment, the said burner 100 is interchangeable with a second burner (not shown) connected to a supply of combustible gas or liquid, and the process comprises a preliminary step preheating the combustion chamber 200 using the second burner fed by a combustible gas or liquid. In one embodiment, the combustion chamber is preheated to 800°C. Then in a second preliminary step, the second burner is replaced by the burner 100 described herein above and solid powdered combustible is injected with the carrier air, the cooling air and the secondary air. The combustion chamber preheated beforehand provides the heat necessary to ignite the flame.

Alternatively, the said second port 114 of the burner can be connected to a combustible gas supply instead of the solid pulverized combustible and carrier gas supply. Once the combustion chamber has reached a desired temperature, for example 800°C, the second port 114 can be disconnected from the said combustible gas supply and connected to a solid pulverized combustible and carrier gas supply.

In one embodiment of the process, the solid pulverized combustible is injected with the carrier gas in the combustion chamber with a speed of injection of 25 m/s. The cooling fluid is flown through the bore 104 of the first sleeve at a speed of injection of 5 m/s to cool the holed plate 102 and such as to provide a depression of air which causes the solid powdered combustible to flow circularly back and forth, creating a bluff body effect feeding and stabilizing the flame. The swirl air is injected into the combustion chamber with a speed of injection comprised between 40 m/s and 60 m/s, preferably at least 50 m/s. The secondary air is injected in the combustion chamber through the reduced channel 108 of the second annular channel 106 with a speed of injection higher than the speed of injection of the solid pulverized combustible and carrier gas, for example a speed of injection comprised between 60 m/s and 100 m/s, more particularly between 70 m/s and 90 m/s.

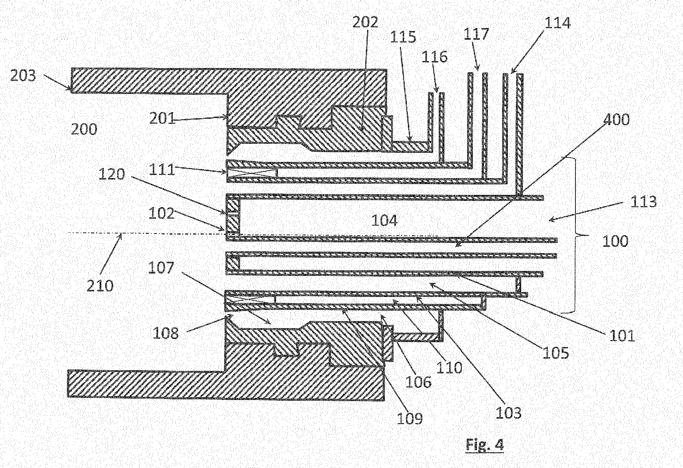

The figure 4 represents an embodiment of the one described in relation with figure 3, with a tubular injector 400 as an additional feature. The said burner comprises a tubular injector 400 arranged within the bore 104 of the said first innermost sleeve 101 and connected to a hole 120 of the said plate 102, the said tubular injector 400 being optionally removable, and comprising a connecting port for a secondary combustible supply to provide a secondary combustible for igniting the flame or for providing a cheaper combustible used partially in combination to the said combustible provided through the first annular channel, in order to decrease the costs of combustible. The tubular injector 400 can also be provided as an additional feature to the embodiment described in relation with the figure 2.

The effects on various parameters of operation of an annular shaft kiln comprising the burner and the combustion chamber according to the invention and the effects on the production of quicklime in such kiln has been measured over several months.

During a first period of time of six months, in an annular vertical shaft kiln comprising four cylindrical combustion chambers having their longitudinal axis oriented horizontally, one of the combustion chamber has been provided by a burner according to the second embodiment of the invention, forming thereby a combustion chamber according to the second embodiment described above, and the three other combustion chambers were provided with a burner of prior art wherein the burners of prior art comprise a central channel for injection of solid combustible carried by carrier air.

During a second period of time of 2.5 months all the burners were replaced with a burner according to the second embodiment of the invention described above and the temperature of the burners was set up to about 1230°C.

During a following third period of time of 1 month, the same burners were kept in place and the temperature of the burners was increased to about 1260°C-1270°C.

During a fourth period of 1.5 month the conditions of operation were set back as to the second period.

The T60 of the production of quicklime obtained during those four periods has been measured periodically and it has been seen that the T60 decreased from 3.9 s to 3.1 s from the first period of time to the second period of time. During the third period, the increase of the temperature of the burners has increased to T60 to 5.1 s. This trial was provided for evaluating how the production could be increased without impacting too much the T60.

The daily production of quicklime during the first period of time and second period of time with a temperature of the burners set up between 1220 and 1230 °C was ranging between 140 and 160 T/day. During the third period using four burners according to the invention set up to a temperature ranging from 1250 to 1270°C, the daily production increased to range between 160 and 180T/day.

Comparative measurements of noxious compounds emitted during calcination of limestone in the annular shaft kilns provided with and without the burners according to the invention have been performed according to the standards in force and show notably a reduction factor of 25 for the emissions of mercury, a reduction factor of 10 for the emissions of arsenic and PAH (Polycyclic aromatic hydrocarbon), a reduction factor of 2 for the HCl, SOₓ and HF, from the use of burners of prior art to the use of burners according to the present invention.

Unlike the burners of prior art wherein the solid combustible is injected from a central channel inclined relative to the central axis of the combustion chamber and oriented towards the end of the combustion chamber opened to the bed of material, the burners according to the invention are oriented along the longitudinal axis of the combustion chamber, resulting in a flame well centered and well controlled in the combustion chamber with less constraints on the refractory. Therefore, the lifetimes of the refractories of the arch connected to the combustion chamber and the refractories of the combustion chamber are prolonged with less maintenance and production stops needed.

It should be understood that the present invention is not limited to the described embodiments and that variations can be applied without going outside of the scope of the appended claims

## Claims

1. Burner (100) for a combustion chamber (200) of an annular vertical shaft (300) **characterized in that** it comprises:
a. a first innermost sleeve (101) having a bore (104) for injecting cooling air, having an extremity (112) directed through the inside of the said combustion chamber (200) the said extremity being closed by a plate (102) provided with a plurality of holes (120);
b. a second sleeve (103) surrounding said first sleeve (101) and forming an first annular channel (105) with the said first sleeve (101), the said first annular channel (105) being provided for injection of a combustible, preferably a solid powdered combustible carried by a carrier fluid.

2. Burner (100) according to claim 1 **characterized in that** it further comprises a third sleeve (109) surrounding said second sleeve (103) and forming a third annular channel (110) with the said second sleeve (103), the said third annular channel (110) being provided for injection of air, at least one of the said second sleeve (103) or third sleeve (110) being provided by fins (111) arranged within the said third annular channel (110) and extending helically from an first location to a second location such as to provide a swirl movement to the said air improving the mixing of said combustible with air.

3. Burner (100) according to claim 1 or 2, further comprising a tubular injector (400) arranged within the bore (104) of the said first innermost sleeve (101) and connected to a hole (120) of the said plate (102), the said tubular injector (400) being optionally removable, and comprising a connecting port for a secondary combustible supply to provide a secondary combustible for igniting the flame or for providing a cheaper combustible used partially in combination to the said combustible provided through the first annular channel.

4. Combustion chamber (200) for an annular vertical shaft kiln (300), the said combustion chamber having a first closed extremity (201) provided with a cylindrical inlet (202) through which is inserted a burner (100) for producing a flame and a second extremity (203) opened to the inside of the said shaft kiln, **characterized in that** the said burner (100) comprises:
a. a first innermost sleeve (101) having a bore (104) for injecting cooling air, having an extremity (112) directed through the inside of the said combustion chamber (200) the said extremity being closed by a plate (102) provided with a plurality of holes (120);
b. a second sleeve (103) surrounding said first sleeve (101) and forming an first annular channel (105) with the said first sleeve (101), the said first annular channel (105) being provided for injection of a combustible, preferably a solid powdered combustible carried by a carrier fluid;
and wherein said cylindrical inlet (202) has a cylindrical inner wall forming a second annular channel (106) with the said burner (100) for injection of secondary air to confine the said flame within a fictive cylinder of diameter inferior to the diameter of the said combustion chamber (200).

5. Combustion chamber (200) according to claim 4 wherein the said burner (100) further comprises a third sleeve (109) surrounding said second sleeve (103) and forming a third annular channel (110) with the said second sleeve (103), the said third annular channel (110) being provided for injection of air, at least one of the said second sleeve (103) or third sleeve (110) being provided by fins (111) arranged within the said third annular channel (110) and extending helically from an first location to a second location such as to provide a swirl movement to the said air improving the mixing of said combustible with air.

6. Combustion chamber (200) according to claim 4 or 5 wherein the said combustion chamber is cylinder developed around a longitudinal axis (201) and wherein the said burner is arranged coaxially or parallel relative to the said longitudinal axis (201).

7. Combustion chamber (200) according to any one of the claims 4 to 6 wherein each of the said sleeves has walls having a thickness comprises between 2 mm and 20 mm, preferably between 4 mm and 10 mm.

8. Combustion chamber (200) according to any one of the claims 4 to 7 wherein the ratio between the external diameter of the said first sleeve (101) on the inner diameter of the said second sleeve (103) is comprised between 10% and 99%, preferably between 50 % and 95%.

9. Combustion chamber (200) according to any one of the claims 4 to 8 wherein the said second annular channel between the said cylindrical inlet and the said burner comprises a first portion (107) upstream a second terminal portion (108), wherein the said first portion (107) forms a larger annular channel than the second terminal portion (108).

10. Combustion chamber (200) according to any one of the claims 4 to 9 wherein the ratio between the outermost diameter of the said burner (100) and the inner diameter of the said inlet (202) is comprised between 70% and 99%, preferably between 80% and 95%.

11. Combustion chamber according to any one of the claims 4 to 10 wherein the said burner further comprises a tubular injector (400) arranged within the bore (104) of the said first innermost sleeve (101) and connected to a hole (120) of the said plate (102), the said tubular injector (400) being optionally removable, and comprising a connecting port for a secondary combustible supply to provide a secondary combustible for igniting the flame or for providing a cheaper combustible used partially in combination to the said combustible provided through the first annular channel.

12. Combustion chamber (200) according to any one of the claims 5 to 11 wherein the ratio between the width of the said third annular channel (110) and the width of the said second annular channel (106) is comprised between 50% and 200%, preferably between 75% and 150%.

13. Process for combustion of a solid powdered combustible in a combustion chamber of an annular vertical shaft kiln the said combustion chamber having a first closed extremity (201) provided with a cylindrical inlet (202) through which is inserted a burner (100) for producing a flame the said combustion chamber having a second extremity (203) opened to the inside of the said shaft kiln, **characterized in that** the said burner (100) comprises:
- a first innermost sleeve (101) having a bore (104) for injecting cooling air and having an extremity (112) directed through the inside of the said combustion chamber (200) and closed by a plate (102) provided with a plurality of holes (120);
- a second sleeve (103) surrounding said first sleeve (101) and forming an first annular channel (105) with the said first sleeve (101), the said first annular channel (105) being provided for injection of combustible, preferably a solid powdered combustible carried by a carrier fluid;
wherein said cylindrical inlet (202) has a cylindrical inner wall forming a second annular channel (106) with the said burner (100) for injection of secondary air to confine the said flame within a fictive cylinder of diameter inferior to the diameter of the said combustion chamber (200)
and wherein the process comprises the steps of :
- injection of said solid powdered combustible through said first annular channel (105) with a carrier fluid having a first speed of injection and igniting a flame;
- injection of a cooling fluid through the said bore (104) of the said first sleeve (101) at a second speed of injection reduced relative to the said first speed of injection for cooling the said holed plate (102);
- injection of secondary air with a third speed of injection increased relative to the said first speed of injection to confine the said flame within a fictive cylinder of diameter smaller than the diameter of the said combustion chamber (200).

14. Process according to claim 13 wherein the said step of igniting said flame is achieved after a step of preheating the said combustion chamber with the said burner (100) fed by combustible gas or with another burner fed by combustible gas.

15. Process according to claims 12 or 13 wherein the said burner further comprises a tubular injector (400) arranged within the bore (104) of the said first innermost sleeve (101) and connected to a hole (120) of the said plate (102), the said tubular injector (400) being optionally removable, and comprising a connecting port for a secondary combustible supply, the process comprising a step of flowing a secondary combustible, preferably with a carrier gas, for igniting the flame or for providing a cheaper combustible used partially in combination to the said combustible flowing through the said first annular channel (103).

16. Process according to any one of the claims 13 to 15 wherein the said burner (200) further comprises a third sleeve (109) surrounding said second sleeve (103) and forming a third annular channel (110) with the said second sleeve (103), the said third annular channel (110) being provided for injection of air, one of the said second sleeve (103) or third sleeve (110) being provided by fins (111) arranged within the said third annular channel (110) and extending helically from an first location to a second location, the process further comprising a step of injecting air with a fourth flow rate intermediate between the said first flow rate and the said third flow rate through the said third annular channel (110) such as to provide a swirl movement to the said air improving the mixing of said combustible with air.
